Europäisches Patentamt

European Patent Office

Office européen des brevets

(11) Numéro de publication: **0 311 524 B1**

## FASCICULE DE BREVET EUROPEEN

(45) Date de publication de fascicule du brevet: **19.11.92**

(51) Int. Cl.5: **B60G 17/02**, B62D 5/06

(21) Numéro de dépôt: **88402532.1**

(22) Date de dépôt: **06.10.88**

Le dossier contient des informations techniques présentées postérieurement au dépôt de la demande et ne figurant pas dans le présent fascicule.

(54) **Essieu à suspension métallique et correcteur de hauteur hydraulique.**

(30) Priorité: **09.10.87 FR 8714266**

(43) Date de publication de la demande:
**12.04.89 Bulletin 89/15**

(45) Mention de la délivrance du brevet:
**19.11.92 Bulletin 92/47**

(84) Etats contractants désignés:
**DE GB IT**

(56) Documents cités:
EP-A- 0 152 914   DE-A- 2 051 807
DE-A- 3 223 195   FR-A- 2 007 757
FR-A- 2 216 133   FR-A- 2 251 450
GB-A- 1 228 842

(73) Titulaire: **AUTOMOBILES PEUGEOT**
**75, avenue de la Grande Armée**
**F-75116 Paris(FR)**

Titulaire: **AUTOMOBILES CITROEN**
**62 Boulevard Victor-Hugo**
**F-92200 Neuilly-sur-Seine(FR)**

(72) Inventeur: **Dessirieix, Joel André**
**18, allée de la Grange de Malassis Chevry**
**F-91190 Gif sur Yvette(FR)**

(74) Mandataire: **Boivin, Claude**
**9, rue Edouard-Charton**
**F-78000 Versailles(FR)**

Rank Xerox (UK) Business Services

## Description

La présente invention concerne un essieu à suspension métallique muni d'une correction de hauteur hydraulique.

Les essieux à suspension métallique, à barres de torsion ou à ressorts de compression peuvent être munis de moyens de correction de hauteur selon la charge. Ils comportent dans ce cas des moyens de détection de la hauteur, par exemple sensibles au pivotement de la section médiane d'une barre anti-devers, et des moyens pour faire pivoter les ancrages des barres ou pour déplacer les appuis des ressorts de manière à ramener la hauteur de l'essieu à sa valeur de référence.

On connait des essieux à suspension métallique munis de moyens de correction de hauteur électriques, les moyens de détection agissant sur un moteur électrique, avec des moyens de liaison agencés de telle sorte que la rotation du moteur entraîne le pivotement simultané et identique des deux barres de torsion de la suspension, ou le déplacement des deux appuis des ressorts de compression.

On connait également des moyens hydrauliques de correction de hauteur appliqués à des suspensions hydropneumatiques. Ces moyens hydrauliques comprennent un tiroir hydraulique commandé par les moyens de détection et propres à mettre en pression ou à l'échappement les vérins de la suspension de l'essieu de manière à corriger la hauteur.

Les correcteurs de hauteur pour suspension hydropneumatiques sont habituellement insérés dans des circuits hydrauliques à "centre fermé" comportant un accumulateur avec une réserve de liquide sous pression régulée. Un tel accumulateur n'existe pas dans les véhicules à suspension métallique.

Quand un véhicule à suspension métallique est équipé d'une direction assistée hydraulique, il est généralement muni d'un circuit hydraulique à "centre ouvert" comportant une pompe qui débite dans un réservoir à la pression atmosphérique et des moyens pour prélever du liquide dans le circuit. D'autre part la correction de hauteur intervient principalement à l'arrêt du véhicule pendant la charge, elle consomme un très faible débit. Une même pompe peut donc alimenter les deux circuits de direction assistée et de correction de hauteur.

Le document DE-A- 3 223 195 décrit une suspension de ce genre qui comporte les caractéristiques mentionnées dans le préambule de la revendication 1.

La présente invention a pour objet un essieu à suspension métallique et correcteur de hauteur pour véhicule à direction assistée, qui présente l'avantage de ne nécessiter ni une source d'énergie particulière pour la correction de hauteur, ni une modification de la direction assistée et dans lequel la correction de hauteur peut être effectuée à tout moment.

L'essieu selon l'invention est caractérisé en ce que le diviseur de débit est du type avec auto-contrôle et que le système de suspension est équipé de moyens de détection de hauteur agissant sur les moyens de correction, les moyens de correction de hauteur étant des moyens hydrauliques à "centre ouvert" et de ce fait à tout instant disponibles pour répondre à la demande du correcteur de hauteur.

On a décrit ci-après, à titre d'exemples non limitatifs, deux modes de réalisation de l'essieu selon l'invention avec référence aux dessins annexes dans lesquels :

La Figure 1 est le schéma d'un premier mode de réalisation;

La Figure 2 montre un détail d'une variante.

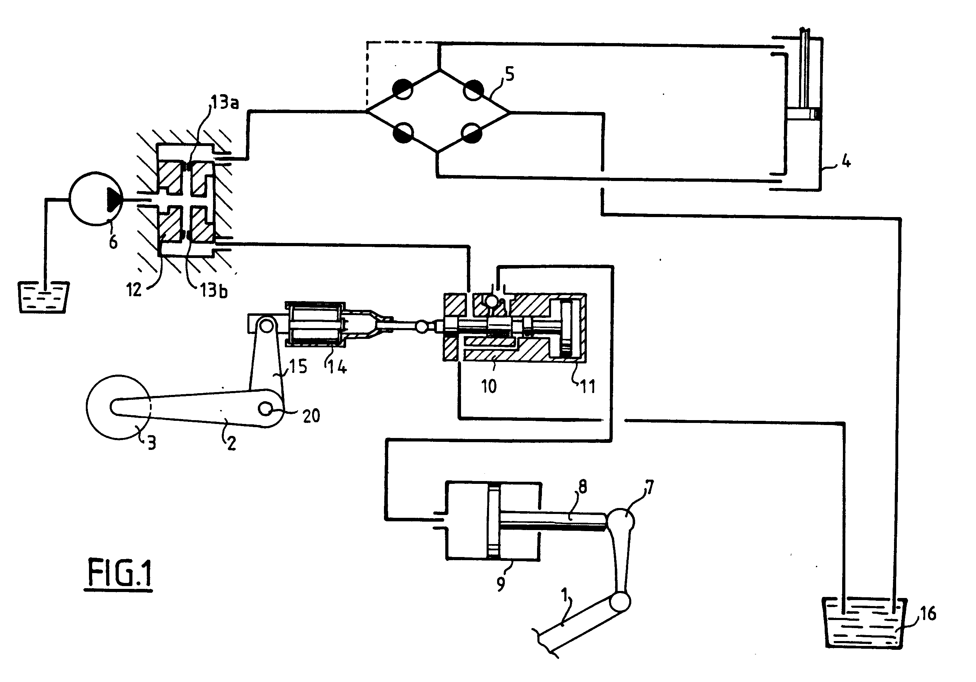

Tel qu'il est représenté à la Figure 1, l'essieu selon l'invention comporte une suspension métallique Celle-ci comprend pour chaque roue une barre de torsion 1 dont une extrémité pivote selon le débattement de la roue et dont l'autre extrémité constituant l'ancrage est montée de manière à pivoter lorsqu'intervient une correction de hauteur.

Une barre anti-dévers 20 est montée entre les deux bras 2 des deux roues 3 de l'essieu, de manière à enregistrer une torsion quand les débattements des deux bras diffèrent. La section médiane de la barre anti-dévers 20 admet une orientation caractéristique de la hauteur de l'essieu.

Le véhicule est à direction assistée et comporte un vérin d'assistance de direction, à double effet 4, qui est rélié par un système de vannes 5 à une pompe 6 à "centre ouvert", c'est-à-dire non associée à un accumulateur de pression.

L'extrémité d'ancrage de la barre de torsion 1 porte un levier d'ancrage 7 sur lequel est en appui la tige de piston 8 d'un vérin à simple effet 9. La chambre de celui-ci opposée à la tige 8 est reliée à la pompe 6 par l'intermédiaire d'un distributeur à tiroirs 10. Celui-ci est muni de moyens de temporisation et de butées 11 de type connu dans les suspensions hydropneumatiques afin d'éviter un fonctionnement intempestif pendant le débattement des roues.

Un diviseur de débit 12 comprenant deux gicleurs 13a et 13b est interposé entre la pompe 6 d'une part, et le système de vannes 5 et le distributeur 10 d'autre part. Ce diviseur répartit le débit de la pompe 6 proportionnellement aux diamètres des deux gicleurs 13a et 13b, en une première partie, la plus importante, vers le système de vannes 5 et en une seconde partie, très faible, vers le distributeur 10.

Le tiroir du distributeur 10 est relié par des moyens élastiques 14 à un levier 15 fixé de préférence au milieu de la barre anti-devers 20.

Sur route, le tiroir du distributeur 10 occupe la position représentée au dessin, le vérin 9 est isolé alors que le diviseur de débit 12 est relié au réservoir 16 de liquide hydraulique. Si le tiroir est déplacé vers la droite au dessin par le levier 15, le vérin 9 est mis en communication avec la pompe 6 par l'intermédiaire du diviseur de débit 12; l'ancrage de la barre de torsion 1 pivote et la garde au sol du véhicule augmente; de manière analogue, elle diminue si le tiroir du distributeur se déplace vers la gauche, le vérin 9 étant mis en communication avec le réservoir 16.

En ligne droite et sans correction de hauteur, les deux parties du débit de la pompe 6 sont ramenées au réservoir 16 respectivement par le système de vannes 5 et par le distributeur 10. Chaque partie est à tout instant disponible, indépendamment l'une de l'autre pour répondre à la demande de direction assistée et/ou à celle du correcteur de hauteur.

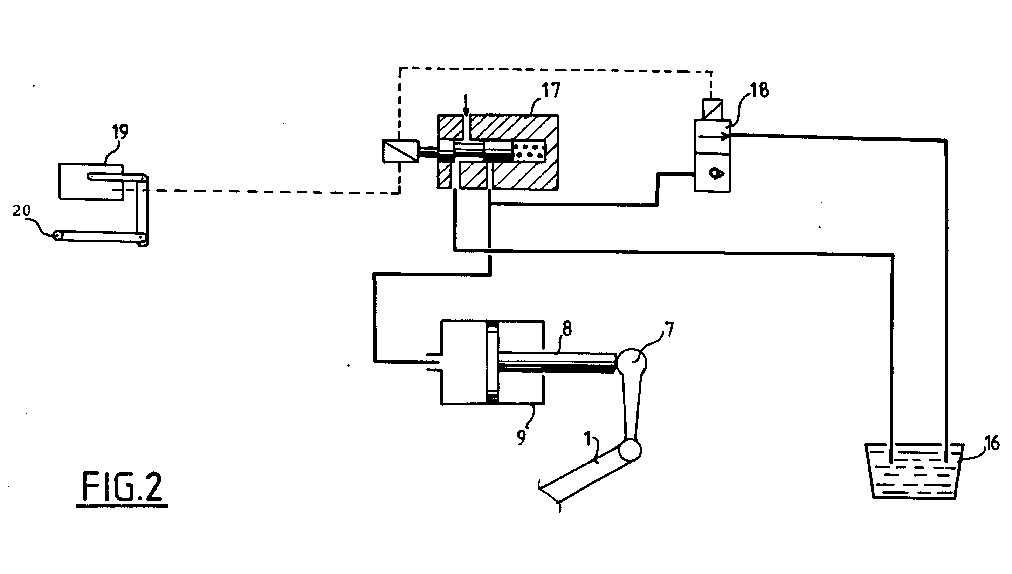

Dans le mode de réalisation de la Figure 2, le distributeur 10 est remplacé par deux électro-vannes à trois voies 17 et 18 toutes deux pilotées par un capteur électronique 19, qui comporte un circuit de temporisation, et interposées entre le vérin 9 et respectivement le diviseur de débit 12 et le réservoir 16.

## Revendications

1. Essieu à suspension métallique, monté sur un véhicule à direction assistée hydraulique à "centre ouvert" et muni de moyens de correction de hauteur par pivotement d'ancrage de barres de torsion (1) ou variation d'appuis de ressorts de compression et équipé de moyens (20-15) de détection de hauteur agissant sur les moyens de correction (7-8-9), les moyens de correction de hauteur étant montés en dérivation sur les moyens (4-5) d'assistance de direction, l'essieu comportant un diviseur de débit (12) sur lequel sont branchés le circuit hydraulique de direction assistée et le circuit de correction de hauteur et propre à répartir de manière approximativement constante le débit de direction assistée et le débit de correction de hauteur, caractérisé en ce que le diviseur de débit (12) est du type avec auto-contrôle et que le système de suspension est équipé de moyens (20-15) de détection de hauteur agissant sur les moyens de correction (7-8-9), les moyens de correction de hauteur étant des moyens hydrauliques à "centre ouvert" et de ce fait à tout instant disponibles pour répondre à la demande du correcteur de hauteur.

2. Essieu selon la revendication 1, caractérisé en ce que le diviseur de débit (12) comprend un premier gicleur (13a) interposé entre la pompe (6) et les moyens d'assistance de direction (4-5) et un second gicleur (13b) interposé entre cette pompe et les moyens de correction de hauteur.

3. Essieu selon la revendication 1 ou 2, caractérisé en ce que les moyens hydrauliques de correction de hauteur comprennent un vérin simple effet (9) dont la chambre du côté opposé à la tige (8) peut être raccordée à la pression ou à l'échappement pendant que la tige (8) est poussée dans le sens de l'enfoncement par un levier (7) solidaire de l'ancrage de la barre de torsion (1) ou de l'appui des moyens métalliques précontraints de la suspension.

4. Essieu selon la revendication 3, caractérisé en ce que le vérin de correction de hauteur (9) est mis à la pression ou à l'échappement par une vanne hydraulique à tiroir (10) munie de moyens de temporisation et de butée (11) et reliée par des moyens élastiques (14) aux moyens de détection (20-15).

5. Essieu selon la revendication 3, caractérisé en ce que le vérin de correction de hauteur (9) est mis à la pression par une première électro-vanne (17) ou à l'échappement par une deuxième électro-vanne (18) commandées par un capteur de hauteur électronique (19) comportant un circuit de temporisation.

## Claims

1. Axle with mechanical springs mounted on a vehicle with "open centre" hydraulic assisted steering and provided with means for height adjustment via the anchorage pivoting of torsion bars (1) or the variation of supports of compression springs and equipped with height detection means (20-15) acting on the adjustment means (7-8-9), the height adjustment means being mounted in parallel on the steering assitance means (4-5), the axle comprising a discharge divider (12) connected to the assisted steering circuit and the height adjustment circuit and able to distribute approximately constant the assisted steering discharge and the height adjustment discharge, wherein the discharge divider (12) is of the type with autocontrol and the suspension system is equipped with height detection means (20-15) acting on the adjustment means (7-8-9), the height adjustment means being "open centre" hydraulic means thus available at any time to respond to the request of the height corrector.

2.  Axle according to claim 1,
    wherein the discharge divider (12) includes one first jet (13a) inserted between the pump (6) and the steering assistance means (4-5) and a second jet (13b) inserted between this pump and the height adjustment means.

3.  Axle according to claim 1 or 2,
    wherein the hydraulic height adjustment means include a single action jack (9) with its chamber on the side opposite the rod (8) possibly being connected to the pressure or exhaust, whilst the rod (8) is pushed in the direction of penetration by a lever (7) integral with the anchorage of the torsion bar (1) or with the support of the prestressed suspension metallic means.

4.  Axle according to claim 3,
    wherein the height adjustment jack (9) is pressurized or released by a hydraulic valve (10) provided with temporization and stop means (11) and connected by elastic means (14) to the detection means (20-15).

5.  Axle according to claim 3,
    wherein the height adjustment jack (9) is pressurized by a first electrovalve or released by a second electrovalve, both controlled by an electronic height sensor comprising a temporization circuit.

**Patentansprüche**

1.  Achse mit mechanischer Federung eines Fahrzeugs mit einer über einen "offenen" Hydraulikkreis bewirkten Servolenkung und einer hydraulischen Niveauregelung durch Schwenken der Verankerung von Stabilisatoren (1) oder Änderung der Auflager von Druckfedern und Vorrichtungen zur Niveauerkennung (20, 15), durch welche entsprechende Vorrichtungen zur Niveauregelung (7, 8, 9) nachgesteuert werden, wobei die Vorrichtungen zur Niveauregelung durch Abzweigen an die Vorrichtungen für Servostlenkung (4, 5) angeschlossen sind und die Achse ein Stromteilerventil (12) besitzt, an das der Hydraulikkreis für Servolenkung und der für Niveauregelung angeschlossen sind, und das eine annähernd konstante Aufteilung des Durchsatzes auf Servolenkung und Niveauregelung gewährleistet, dadurch gekennzeichnet, daß das Stromteilerventil (12) selbstüberwachend ist und die Fahrzeugfeder Vorrichtungen zur Erkennung des Niveaus und zur Nachsteuerung von Niveauregelungsvorrichtungen (7, 8, 9) besitzt, wobei letztere auf einem "offenen" Hydraulikkreis aufgebaut sind und somit jederzeit für die Niveauregelung zur Verfügung stehen.

2.  Achse nach Patentanspruch 1,
    dadurch gekennzeichnet, daß das Stromteilerventil (12) eine erste Düse (13a) zwischen der Pumpe (6) und der Servolenkungsvorrichtung (4, 5) sowie eine zweite Düse (13b) zwischen der Pumpe (6) und den Niveauregelungsvorrichtungen besitzt.

3.  Achse nach Patentanspruch 1 und 2,
    dadurch gekennzeichnet, daß die hydraulischen Niveauregelungsvorrichtungen einen in einer Richtung wirkenden Druckzylinder (9) besitzt, dessen der Kolbenstange (8) gegenüberliegender Zylinderraum an die Druckzunahme oder Druckminderung angeschlossen werden kann, während die Kolbenstange (8) durch einen fest mit der Verankerung des Stabilisators (1) oder mit dem Auflager der vorgespannten mechanischen Federungsmittel verbundenen Hebel (7) in Eindrückrichtung verlagert wird.

4.  Achse nach Patentanspruch 3,
    dadurch gekennzeichnet, daß der Druckanstieg bzw. die Drucksenkung in dem Niveauregelungszylinder (9) über ein Hydraulikventil (10) mit Schieber erfolgt, das über eine Verzögerungsvorrichtung und einen Anschlag (11) verfügt und über elastische Mittel (14) mit den Vorrichtungen zur Niveauerkennung (20, 15) verbunden ist.

5.  Achse nach Patentanspruch 4,
    dadurch gekennzeichnet, daß der Niveauregelungszylinder (9) über ein erste Elektroventil (17) unter Druck gesetzt bzw. sein Druck über ein zweites Elektroventil (18) gesenkt wird, wobei beide E-Ventile über einen mit einem Verzögerungskreis versehenen elektronischen Sensor (19) zur Niveauerkennung gesteuert werden.

FIG.1

EP 0 311 524 B1

FIG.2